# EUROPÄISCHE PATENTANMELDUNG

(11) **EP 4 520 424 A1**
(43) Veröffentlichungstag der Anmeldung: **12.03.2025**
(21) Anmeldenummer: 24188520.1
(22) Anmeldetag: 15.07.2024
(51) Int. Cl.: B01D 53/04, B01D 46/00

(54) **HOHLZYLINDERFÖRMIGES CO2-ABTRENNUNGSMODUL FÜR EINE CO2-ABTRENNUNGSVORRICHTUNG ZUM ABTRENNEN VON CO2**

(30) Priorität: 17.08.2023 DE 102023207885
(71) Anmelder: Robert Bosch GmbH, 70442 Stuttgart (DE)
(72) Erfinder: Kneule, Friedrich, 71277 Rutesheim (DE); Bauer, Harald, 71139 Ehningen (DE)

(57) **Zusammenfassung**

Es wird ein hohlzylinderförmiges CO2-Abtrennungsmodul (10) für eine CO2-Abtrennungsvorrichtung (50) zum Abtrennen von CO2 aus einem zugeführten Luftstrom (12) vorgeschlagen, welches einen hohlzylinderförmigen CO2-Abtrennungskörper (14) zum Abtrennen des CO2 aus dem zugeführten Luftstrom (12), wobei der hohlzylinderförmige CO2-Abtrennungskörper (14) in radialer Richtung (18) luftdurchlässig ausgebildet ist, und einen umfangsseitig von dem hohlzylinderförmigen CO2-Abtrennungskörper (14) umschlossenen vollzylinderförmigen Hohlraum (16), sodass der Luftstrom (12) in diesen einführbar oder aus diesem abführbar ist.

## Beschreibung

### Stand der Technik

Die Erfindung betrifft ein hohlzylinderförmiges CO2-Abtrennungsmodul für eine CO2-Abtrennungsvorrichtung zum Abtrennen von CO2 (Kohlenstoffdioxid) aus einem zugeführten Luftstrom, eine CO2-Abtrennungsvorrichtung zum Abtrennen von CO2 aus einem zugeführten Luftstrom und ein CO2-Abtrennungssystem zum Abtrennen von CO2 aus einem zugeführten Luftstrom. Die Erfindung betrifft ferner eine Verwendung eines hohlzylinderförmigen CO2-Abtrennungsmoduls zum Abtrennen von CO2 aus einem zugeführten Luftstrom

Um die Erwärmung der Erdatmosphäre zu begrenzen, werden sogenannte DAC-Systeme (Direct Air Capture) eingesetzt, um aus der Luft CO2 (Kohlenstoffdioxid) abzutrennen bzw. zu entfernen.

Die WO 2021/239747 A1 offenbart ein Verfahren zur Adsorption und Desorption eines Sorptionsmittels, das bei der zyklischen Adsorption-Desorption zum Auffangen von CO2 direkt aus atmosphärischer Umgebungsluft oder stark verdünnten Quellen verwendet wird sowie eine Konfiguration einer Adsorberstruktur mit einer Vielzahl paralleler Oberflächen zur Aufnahme von Kohlendioxid aus der Umgebungsluft. Hierbei wird das CO2 in der Tiefe der Struktur gebunden, weshalb sehr viele Filterbahnen in sehr engem Abstand zueinander angeordnet sind.

Ein Nachteil hierbei liegt darin, dass aufgrund der sehr geringen Abstände der Filterbahnen zueinander diese sich praktisch kaum homogen durchströmen lassen, d.h. die theoretische Effizienz und mechanische Haltbarkeit kaum erreicht werden kann. Dies liegt daran, dass Luftfilter große Luftdurchsätze dann effektiv reinigen können, wenn die luftführenden Bereiche zwischen den Filterbahnen groß sind, da die wenigen luftgetragenen Partikel direkt auf der Oberfläche des Filter liegen bleiben und die Poren kaum versperren.

Ein weiterer Nachteil besteht darin, dass es bei der Durchströmung großer paralleler Filterflächen mit geringem Abstand zueinander, insbesondere bei inhomogenen Strömungswiderständen zu Schwingungen der Filterbahnen kommt, was wiederum mechanischen Verschleiß sowie Oberflächenkontakt mit einem Verkleben der Oberflächen bei Verschmutzung und feuchtem Wetter zur Folge haben kann. Dieser Effekt wird durch klimatische Schwankungen noch verstärkt, wenn Änderungen der Luftfeuchte zu den typischen Materialquellungen führen und die Filterbahnen nicht mehr straff gespannt sind.

Nachteilig ist ferner, dass die beschriebenen Abstandshalter nicht nur im Bereich der Ein- und Ausströmung notwendig sind, sondern auch im Bereich der Flächen, sodass der apparative Aufbau zur Sicherstellung der offenen Spalte und zum Stabilisieren der Filterbahnen, um Flattern zu verhindern, sehr aufwendig ist.

Außerdem kommt es beim Desorptionsvorgang mit Dampf zu einer im Vergleich mit klimatischen Schwankungen großen Feuchtebeladung mit dem vermehrten Risiko, dass sich durch die Feuchtigkeit bei z.B. langen zellulosebasierten Adsorbermaterialien "Säcke" ausbilden, die durch die Strömung dann zusammenkleben können. Wenn die Filterbahnen mechanisch degradieren, können sich zudem Teile ablösen und den Produktgasstrom verunreinigen.

### Offenbarung der Erfindung

Gegenstand der vorliegenden Erfindung ist ein hohlzylinderförmiges CO2-Abtrennungsmodul für eine CO2-Abtrennungsvorrichtung zum Abtrennen von CO2 aus einem zugeführten Luftstrom mit
- einem hohlzylinderförmigen CO2-Abtrennungskörper zum Abtrennen des CO2 aus dem zugeführten Luftstrom, wobei der hohlzylinderförmige CO2-Abtrennungskörper in radialer Richtung luftdurchlässig ausgebildet ist; und
- einem umfangsseitig von dem hohlzylinderförmigen CO2-Abtrennungskörper umschlossenen vollzylinderförmigen Hohlraum, sodass der Luftstrom
   o axial in den vollzylinderförmigen Hohlraum einführbar und anschließend in radialer Richtung nach außen durch den hohlzylinderförmigen CO2-Abtrennungskörper abführbar ist oder
   ∘ von außen in radialer Richtung nach innen durch den hohlzylinderförmigen CO2-Abtrennungskörper in den vollzylinderförmigen Hohlraum einführbar und anschließend axial aus diesem abführbar ist.

Gegenstand der vorliegenden Erfindung ist ferner eine CO2-Abtrennungsvorrichtung zum Abtrennen von CO2 aus einem zugeführten Luftstrom mit einer Abtrennungskammer und einer in dieser angeordneten Modulaufnahmeeinheit, wobei die Modulaufnahmeeinheit eine Vielzahl von zylinderförmigen Aufnahmevorsprüngen zur formschlüssigen Aufnahme von vorangehend beschriebenen hohlzylinderförmigen CO2-Abtrennungsmodulen aufweist.

Gegenstand der vorliegenden Erfindung ist außerdem ein CO2-Abtrennungssystem zum Abtrennen von CO2 aus einem zugeführten Luftstrom mit
- einer vorangehend beschriebenen CO2-Abtrennungsvorrichtung und
- einer Vielzahl von vorangehend beschriebenen hohlzylinderförmigen CO2-Abtrennungsmodulen, welche in der Modulaufnahmeeinheit der CO2-Abtrennungsvorrichtung formschlüssig aufgenommen sind.

Gegenstand der vorliegenden Erfindung ist des Weiteren eine Verwendung eines vorangehend beschriebenen hohlzylinderförmigen CO2-Abtrennungsmoduls zum Abtrennen von CO2 aus einem zugeführten Luftstrom, wobei der Luftstrom zum Abtrennen des CO2
- axial in den vollzylinderförmigen Hohlraum eingeführt und anschließend in radialer Richtung nach außen durch den hohlzylinderförmigen CO2-Abtrennungskörper abgeführt wird oder
- von außen in radialer Richtung nach innen durch den hohlzylinderförmigen CO2-Abtrennungskörper in den vollzylinderförmigen Hohlraum eingeführt und anschließend axial aus diesem abgeführt wird.

Die oben genannten Nachteile des Standes der Technik werden durch den hohlzylinderförmigen Aufbau des erfindungsgemäßen CO2-Abtrennungsmoduls gelöst, wobei ferner Herstellung, Montage und Wartung sehr einfach und automatisiert, aber auch kostengünstig realisiert werden können, da die hohlzylinderförmigen CO2-Abtrennungsmodule von der Einfuhrseite oder der Abfuhrseite einfach eingeschoben und wieder herausgezogen werden können, was im Gegensatz zum Tauschen von Adsorbereinschüben gemäß dem Stand der Technik wesentlich einfacher und kostengünstiger ist, da nur simple und schnelle mechanische Arbeiten notwendig sind.

Wenn ein einzelnes CO2-Abtrennungsmodul verblockt, bleiben außerdem die restlichen davon unbeeinflusst und auch das Bauvolumen, d.h. das Volumen der Abtrennungskammer kann besser ausgenutzt werden.

Das hohlzylinderförmige CO2-Abtrennungsmodul ist für den Einsatz in einer CO2-Abtrennungsvorrichtung zum Abtrennen von CO2 aus einem zugeführten Luftstrom ausgebildet bzw. eingerichtet. Dementsprechend ist die CO2-Abtrennungsvorrichtung zum Abtrennen von CO2 aus einem zugeführten Luftstrom mittels eines Abtrennungsverfahrens ausgebildet. Der Begriff "Abtrennen" umfasst im Rahmen der vorliegenden Erfindung jegliche sinnvolle Art der Abtrennung bzw. Abscheidung von CO2 (Kohlenstoffdioxid) aus der Luft, wobei eine Bindung und/oder Anhaftung und/oder Einlagerung und/oder Aufnahme von CO2-Molekülen an einem CO2-Abtrennungskörper erfolgt.

Hierbei kann das hohlzylinderförmige CO2-Abtrennungsmodul bzw. die CO2-Abtrennungsvorrichtung insbesondere ausgebildet sein, das CO2 aus dem zugeführten Luftstrom mittels eines Abtrennungsverfahrens abzutrennen, bei dem die Abtrennung unter Energieabgabe bzw. Wärmeabgabe an den Luftstrom erfolgt. Das Abtrennungsverfahren ist bevorzugt ein Sorptionsverfahren, insbesondere ein Adsorptionsverfahren und/oder ein Absorptionsverfahren. Demnach kann das Abtrennen des CO2 insbesondere mittels zumindest eines der folgenden Verfahren oder Mischformen daraus erfolgen:
- chemisches Adsorptionsverfahren
- physikalisches Adsorptionsverfahren
- chemisches Absorptionsverfahren
- physikalisches Absorptionsverfahren

Die CO2-Abtrennungsvorrichtung ist ferner bevorzugt zum Freisetzen von CO2 aus dem CO2-Abtrennungskörper mittels eines Freisetzungsverfahrens ausgebildet. Der Begriff "Freisetzen" umfasst im Rahmen der vorliegenden Erfindung jegliche sinnvolle Art der Freisetzung bzw. Austreibung von CO2 (Kohlenstoffdioxid) aus dem CO2-Abtrennungskörper, wobei eine Lösung und/oder Freisetzung und/oder Abgabe von CO2-Molekülen aus dem CO2-Abtrennungskörper erfolgt.

Hierbei ist die CO2-Abtrennungsvorrichtung insbesondere ausgebildet, das CO2 aus dem CO2-Abtrennungskörper mittels eines Freisetzungsverfahrens freizusetzen bzw. zu lösen, bei dem unter Energieeinbringung bzw. Wärmeeinbringung in das CO2-Abtrennungskörper das CO2 von diesem freigesetzt wird.

Das Abtrennungsverfahren ist bevorzugt ein Desorptionsverfahren. Demnach kann das Freisetzen des CO2 insbesondere mittels zumindest eines der folgenden Verfahren oder Mischformen daraus erfolgen:
- chemisches Desorptionsverfahren
- physikalisches Desorptionsverfahren

Bevorzugt ist die CO2-Abtrennungsvorrichtung ausgebildet, das Abtrennungsverfahren und das Freisetzungsverfahren zyklisch durchzuführen. Hierbei ist die CO2-Abtrennungsvorrichtung insbesondere ausgebildet, das Sorptionsverfahren und das Desorptionsverfahren zyklisch durchzuführen. Die grundsätzliche Funktionsweise der CO2-Abtrennungsvorrichtung kann bspw. analog zu der eingangs erwähnten WO 2021/239747 A1 erfolgen.

Der Begriff "Zuführen" bzw. "zugeführt" umfasst im Rahmen der vorliegenden Erfindung in erster Linie ein aktiv durchgeführtes bzw. veranlasstes und damit technisch gesteuertes bzw. geregeltes Zuführen des Luftstroms mittels einer Gebläseeinheit bzw. Ventilatoreinheit der CO2-Abtrennungsvorrichtung. Der Begriff "Zuführen" bzw. "zugeführt" kann jedoch auch ein passiv durchgeführtes bzw. veranlasstes Zuführen des Luftstroms umfassen, ohne dabei den Rahmen der vorliegenden Erfindung zu verlassen. Folglich kann der Luftstrom auf beliebige, bspw. auf natürliche Art und Weise (als Wind) zugeführt werden.

Das hohlzylinderförmige CO2-Abtrennungsmodul weist zum Abtrennen des CO2 einen hohlzylinderförmigen CO2-Abtrennungskörper auf. Erfindungsgemäß ist der hohlzylinderförmige CO2-Abtrennungskörper in radialer Richtung (des hohlzylinderförmigen CO2-Abtrennungskörpers bzw. des hohlzylinderförmigen CO2-Abtrennungsmoduls) luftdurchlässig ausgebildet ist. Ferner weist das hohlzylinderförmige CO2-Abtrennungsmodul einem umfangsseitig von dem hohlzylinderförmigen CO2-Abtrennungskörper umschlossenen vollzylinderförmigen Hohlraum auf, sodass der Luftstrom (je nach Strömungsrichtung)
- axial in den vollzylinderförmigen Hohlraum einführbar und anschließend in radialer Richtung nach außen, d.h. außerhalb des hohlzylinderförmigen CO2-Abtrennungsmoduls, durch den hohlzylinderförmigen CO2-Abtrennungskörper abführbar ist oder
- von außen, d.h. außerhalb des hohlzylinderförmigen CO2-Abtrennungsmoduls, in radialer Richtung nach innen durch den hohlzylinderförmigen CO2-Abtrennungskörper in den vollzylinderförmigen Hohlraum einführbar und anschließend axial aus diesem abführbar ist.

Bei der radialen Richtung kann es sich um eine radiale Richtung von einem Mittelpunkt bzw. einer Mittelachse des hohlzylinderförmigen CO2-Abtrennungskörpers nach außen oder von außen zu einem Mittelpunkt bzw. einer Mittelachse des hohlzylinderförmigen CO2-Abtrennungskörpers nach innen handeln.

Der hohlzylinderförmige CO2-Abtrennungskörper ist bevorzugt als gerader Hohlzylinder ausgebildet. Der hohlzylinderförmige CO2-Abtrennungskörper kann bevorzugt eine Mantelfläche mit einem kreisförmigen oder elliptischen Querschnitt aufweisen. Die Mantelfläche kann jedoch auch eine andere passende/funktionale Querschnittsform aufweisen, ohne den Rahmen der vorliegenden Anmeldung zu verlassen.

Der hohlzylinderförmige CO2-Abtrennungskörper ist bevorzugt fest ausgebildet. Der hohlzylinderförmige CO2-Abtrennungskörper kann insbesondere ein festes (entsprechend funktionalisiertes) Sorptionsmittel, bspw. ein festes Adsorptionsmittel und/oder ein festes Absorptionsmittel umfassen. Demnach kann der hohlzylinderförmige CO2-Abtrennungskörper bspw. einen faserförmigen oder vliesförmigen Feststoff als Trägerstruktur mit einem Grundmaterial aufweisen, welches ausgewählt ist aus Gruppe bestehend aus: Harze, Polymere, Keramiken, Zeolithe, Silicate, metallorganische Verbindungen, organische Materialien wie Cellulose oder Aktivkohle, und Kombinationen daraus. Das Grundmaterial kann wiederum mit Aminen, Kaliumcarbonat oder anderen Komponenten, die ausgebildet sind, CO2 chemisch oder physikalisch zu binden, spezifisch funktionalisiert sein.

Beispielhaft sei die CO2-Adsorption/Absorption an Aminverbindungen, z.B. Lewatit VP OC 1065, erwähnt, bei denen zunächst CO2 und Wasser an Molekülen anhaftet und dann CO2 durch chemische Reaktion eine starke Bindung unter Mitwirkung des Wassers eingeht, um auch bei geringen CO2-Konzentrationen wirksam zu sein.

Es ist außerdem vorteilhaft, wenn der hohlzylinderförmige CO2-Abtrennungskörper
- einen in Umfangrichtung des hohlzylinderförmigen CO2-Abtrennungskörpers, insbesondere um den hohlzylinderförmigen Stützkern gewickelten (entsprechend funktionalisierten) Garn zur Abtrennung, insbesondere Sorption des CO2 aufweist oder daraus besteht; und/oder
- nur eine in Umfangrichtung des hohlzylinderförmigen CO2-Abtrennungskörpers, insbesondere um den hohlzylinderförmigen Stützkern sich erstreckende oder gewickelte (entsprechend funktionalisierte) flächige Lage zur Abtrennung, insbesondere Sorption des CO2 aufweist oder daraus besteht; und/oder
- eine Schichtanordnung aus in Umfangrichtung des hohlzylinderförmigen CO2-Abtrennungskörpers, insbesondere um den hohlzylinderförmigen Stützkern sich erstreckenden oder gewickelten (entsprechend funktionalisierten) flächigen Lagen zur Abtrennung, insbesondere Sorption des CO2 aufweist oder daraus besteht.

Hierbei ist es insbesondere vorteilhaft, wenn
- der gewickelte Garn zusammenhängend ausgebildet ist; und/oder
- die flächige Lage zusammenhängend, insbesondere ferner flach oder in Umfangrichtung des hohlzylinderförmigen CO2-Abtrennungskörpers gefaltet ausgebildet ist; und/oder
- die Schichtanordnung aus flächigen Lagen zusammenhängend, insbesondere ferner flach oder in Umfangrichtung des hohlzylinderförmigen CO2-Abtrennungskörpers gefaltet ausgebildet ist.

Demnach kann der hohlzylinderförmige CO2-Abtrennungskörper bspw. einen Garn oder eine Lage aus einem CO2-Adsorptionsmaterial oder einem funktionalisierten, insbesondere zellulosebasierte oder polymeren Material, auf dem ein Amin-basiertes CO2-Sorptionsmittel aufgetragen ist, aufweisen.

Hierbei sei angemerkt, dass bei der Wicklung des Garns zum einen der Garn auch in mehrere Garnabschnitte gestückelt sein kann. Zum anderen muss nicht jede Lage in sich geschlossen sein. Insbesondere müssen die einzelnen Wicklungen dabei nicht zwingend möglichst dicht aneinander liegen, um "Leckagen" zu verhindern wie bei Filterkerzen. Es können auch mäanderförmige Durchlässe vorhanden sein, so dass sich durch die Lage und Anordnung solcher Durchlässe kaum eine Reduzierung der Adsorptionsmenge von CO2 aus Luft ergibt, die Durchlässe jedoch dafür sorgen können, dass die CO2-Abtrennkörper möglichst gleichmäßig durchströmt werden, um eine möglichst gleichmäßige Beladung mit CO2 über Zeit zu erreichen.

Die Luftdurchlässigkeit des hohlzylinderförmigen CO2-Abtrennungskörpers kann aufgrund seiner Struktur, bspw. aufgrund seiner Beschaffenheit und/oder von Öffnungen gegeben sein. Bei einem gewickelten Garn kann die Luftdurchlässigkeit des hohlzylinderförmigen CO2-Abtrennungskörpers durch eine geeignete Wickeltechnik an unterschiedliche Garn-Porositäten angepasst werden, um den Druckverlust im der CO2-Abtrennungsvorrichtung bzw. dem CO2-Abtrennungssystem bei unterschiedlichen Konfigurationen konstant zu halten. Demnach weist der hohlzylinderförmigen CO2-Abtrennungskörper bevorzugt eine variable radiale Luftdurchlässigkeit in axialer Richtung auf, welche mittels des gewickelten Garns realisiert wird.

Der vollzylinderförmige Hohlraum ist bevorzugt als gerader Vollzylinder ausgebildet. Der vollzylinderförmige Hohlraum hat bevorzugt eine Mantelfläche mit einem kreisförmigen oder elliptischen Querschnitt. Die Mantelfläche kann jedoch auch eine andere passende/funktionale Querschnittsform aufweisen, ohne den Rahmen der vorliegenden Anmeldung zu verlassen. Die Mantelfläche des vollzylinderförmigen Hohlraums entspricht bevorzugt einer Innenfläche des hohlzylinderförmigen CO2-Abtrennungskörpers.

Bevorzugt weisen die Mantelfläche des hohlzylinderförmigen CO2-Abtrennungskörpers und die Mantelfläche des vollzylinderförmigen Hohlraums die gleiche Querschnittsform, insbesondere eine Kreisform auf.

Es ist vorteilhaft, wenn der vollzylinderförmige Hohlraum sich entlang einer Mittelachse des hohlzylinderförmigen CO2-Abtrennungskörpers erstreckt.

Außerdem ist es vorteilhaft, wenn der vollzylinderförmige Hohlraum an einem axialen Ende geschlossen ausgebildet ist, um den eingeführten Luftstrom in die entsprechende Richtung umzulenken.

Es ist ferner vorteilhaft, wenn der hohlzylinderförmige CO2-Abtrennungskörper einen hohlzylinderförmigen Stützkern aufweist, welcher den vollzylinderförmigen Hohlraum umfangsseitig begrenzt und in radialer Richtung luftdurchlässig ausgebildet ist.

Die Luftdurchlässigkeit des hohlzylinderförmigen Stützkerns kann aufgrund seiner Struktur, bspw. aufgrund seiner Beschaffenheit und/oder von Öffnungen gegeben sein.

Es ist außerdem von Vorteil, wenn das hohlzylinderförmige CO2-Abtrennungsmodul nach Bauart einer Filterkerze, insbesondere einer Meltblown-Filterkerze, oder eines Tiefenfilters oder eines Oberflächenfilters oder eines Faltenfilters ausgebildet ist. Hierdurch können vorteilhafterweise zur Herstellung des CO2-Abtrennungsmoduls etablierte Herstellungsverfahren von jeweiligen Filtern verwendet werden, wodurch wiederum diese nahezu beliebig skalierbar werden, da der CO2-Abtrennungskörper als Bahnware bereitgestellt werden kann, und der universelle Aufbau verschiedener Baugrößen von CO2-Abtrennungsmodulen bzw. CO2-Abtrennungssystemen ermöglicht wird. Bspw. sind 20"- oder 40"-Filterkerzen mechanisch stabil, sodass entsprechend ausgebildete CO2-Abtrennungsmodule in einem ISO-Container einfach manuell oder automatisierbar eingeschoben oder eingehängt werden können.

Des Weiteren ist es vorteilhaft, wenn das hohlzylinderförmige CO2-Abtrennungsmodul zumindest einen Erwärmungskörper zum Erwärmen des hohlzylinderförmigen CO2-Abtrennungskörpers (im Betrieb) aufweist, welcher insbesondere hohlzylinderförmig und in radialer Richtung luftdurchlässig ausgebildet ist.

Hierbei ist es insbesondere vorteilhaft, wenn der Erwärmungskörper
- einen in Umfangrichtung des hohlzylinderförmigen CO2-Abtrennungskörpers, insbesondere um den hohlzylinderförmigen Stützkern gewickelten Heizdraht aufweist oder daraus besteht; und/oder
- eine in Umfangrichtung des hohlzylinderförmigen CO2-Abtrennungskörpers, insbesondere um den hohlzylinderförmigen Stützkern sich erstreckende oder gewickelte flächige Heizlage aufweist oder daraus besteht.

Vorteilhafterweise kann jedoch auch der Stützkern selbst als Erwärmungskörper ausgebildet sein. Hierdurch können insbesondere kleinere CO2-Abtrennungssysteme für den Desorptionsvorgang sehr effizient ausgeheizt werden.

Die Luftdurchlässigkeit des Erwärmungskörpers kann aufgrund seiner Struktur, bspw. aufgrund seiner Beschaffenheit und/oder von Öffnungen gegeben sein. Hierbei kann die Heizlage ein Netz aufweisen oder sein, welches beheizbar ausgebildet ist. Somit kann die Heizlage bspw. als (elektrisch) beheizbares Widerstandsnetz ausgebildet sein.

Die CO2-Abtrennungsvorrichtung weist eine Abtrennungskammer und eine in dieser angeordnete Modulaufnahmeeinheit mit einer Vielzahl von zylinderförmigen Aufnahmevorsprüngen zur formschlüssigen Aufnahme von vorangehend beschriebenen hohlzylinderförmigen CO2-Abtrennungsmodulen auf.

Die Abtrennungskammer ist bevorzugt eine Sorptionskammer. Des Weiteren ist es vorteilhaft, wenn die Abtrennungskammer mehrere Unterkammern aufweist, sodass ein Abtrennungsverfahren und ein Freisetzungsverfahren parallel durchführbar sind.

Hierbei kann die CO2-Abtrennungsvorrichtung eine Ventileinheit mit einer Vielzahl von, insbesondere ansteuerbaren Ventilen aufweisen, um die Abtrennungskammer für das Freisetzungsverfahren zu schließen. Die Ventileinheit kann (jeweils pro Unterkammer) ein Einlassventil aufweisen, welches in einem Einlasskanal für den angesaugten Luftstrom angeordnet und ausgebildet ist, den Einlasskanal zu schließen und die Abtrennungskammer stromaufwärts zu isolieren. Die Ventileinheit kann ferner (jeweils pro Unterkammer) ein Auslassventil aufweisen, welches in einem Auslasskanal für den CO2-reduzierten Luftstrom angeordnet und ausgebildet ist, den Auslasskanal zu schließen und die Abtrennungskammer stromabwärts zu isolieren. Die Ventileinheit kann außerdem (jeweils pro Unterkammer) ein CO2-Ventil aufweisen, welches in einem CO2-Auslasskanal angeordnet und ausgebildet ist, den CO2-Auslasskanal zu öffnen, um das abgetrennte/gebundene und wieder freigesetzte CO2 aus der Abtrennungskammer gezielt auszubringen.

Es ist vorteilhaft, wenn die zylinderförmigen Aufnahmevorsprünge vollzylinderförmig oder hohlzylinderförmig und ferner ausgebildet sind, in die vollzylinderförmigen Hohlräume der hohlzylinderförmigen CO2-Abtrennungsmodule eingeschoben oder über die hohlzylinderförmigen CO2-Abtrennungskörper der hohlzylinderförmigen CO2-Abtrennungsmodule aufgeschoben zu werden, um diese formschlüssig aufzunehmen. Die zylinderförmigen Aufnahmevorsprünge sind bevorzugt gleich ausgebildet.

Hierbei sind die zylinderförmigen Aufnahmevorsprünge bevorzugt als gerade Zylinder ausgebildet. Die zylinderförmigen Aufnahmevorsprünge haben bevorzugt eine Mantelfläche mit einem kreisförmigen oder elliptischen Querschnitt. Die Mantelfläche kann jedoch auch eine andere passende/funktionale Querschnittsform aufweisen, ohne den Rahmen der vorliegenden Anmeldung zu verlassen.

Im Falle, dass die hohlzylinderförmigen CO2-Abtrennungsmodule in die vollzylinderförmigen Hohlräume eingeschoben werden sollen, können die zylinderförmigen Aufnahmevorsprünge sowohl vollzylinderförmig als auch hohlzylinderförmig ausgebildet sein. Hierbei weisen die Mantelflächen der zylinderförmigen Aufnahmevorsprünge und die Mantelflächen der vollzylinderförmigen Hohlräume vorteilhafterweise eine entsprechend aufeinander angepasste, insbesondere die gleiche Querschnittsform auf, welche bevorzugt eine Kreisform ist.

Im Falle, dass die hohlzylinderförmigen CO2-Abtrennungsmodule über die hohlzylinderförmigen CO2-Abtrennungskörper aufgeschoben werden sollen, sind die zylinderförmigen Aufnahmevorsprünge hohlzylinderförmig ausgebildet. Hierbei weisen die Innenflächen der zylinderförmigen Aufnahmevorsprünge und die Mantelflächen der hohlzylinderförmigen CO2-Abtrennungskörper vorteilhafterweise eine entsprechend aufeinander angepasste, insbesondere die gleiche Querschnittsform auf, welche bevorzugt eine Kreisform ist.

Es ist ferner vorteilhaft, wenn die Mittelachsen der zylinderförmigen Aufnahmevorsprünge parallel zueinander ausgerichtet sind. Hierbei ist es insbesondere vorteilhaft, wenn bei bestimmungsgemäßem Gebrauch der CO2-Abtrennungsvorrichtung die zylinderförmigen Aufnahmevorsprünge horizontal ausgerichtet sind, sodass die aufgenommenen hohlzylinderförmigen CO2-Abtrennungsmodule horizontal in der Abtrennungskammer angeordnet sind.

Es ist außerdem vorteilhaft, wenn die zylinderförmigen Aufnahmevorsprünge an einer Kammerwand der Abtrennungskammer angeordnet, insbesondere ferner integral mit dieser verbunden sind. Die zylinderförmigen Aufnahmevorsprünge sind bevorzugt gleichmäßig verteilt an der Kammerwand angeordnet.

Hierbei ist es insbesondere vorteilhaft, wenn die Kammerwand
- lufteinfuhrseitig angeordnet ist und eine Vielzahl von Lufteinfuhröffnungen zum Einführen des Luftstroms in die Abtrennungskammer aufweist; oder
- luftabfuhrseitig angeordnet ist und eine Vielzahl von Luftabfuhröffnungen zum Abführen des CO2-reduzierten Luftstroms aus der Abtrennungskammer aufweist.

Ferner ist es hierbei vorteilhaft, wenn die zylinderförmigen Aufnahmevorsprünge hohlzylinderförmig ausgebildet und mit den
- Lufteinfuhröffnungen fluidisch verbunden sind, sodass der Luftstrom in die zylinderförmigen Hohlräume von formschlüssig aufgenommenen hohlzylinderförmigen CO2-Abtrennungsmodulen einführbar ist; oder
- Luftabfuhröffnungen fluidisch verbunden sind, sodass der CO2-reduzierte Luftstrom aus den zylinderförmigen Hohlräumen von formschlüssig aufgenommenen hohlzylinderförmigen CO2-Abtrennungsmodulen abführbar ist.

Durch diese Maßnahme fungieren die zylinderförmigen Aufnahmevorsprünge nicht nur als Halteelemente für die hohlzylinderförmigen CO2-Abtrennungsmodule, sondern auch
- als Einfuhrkanal zum Einführen des Luftstroms in die Abtrennungskammer, wobei der Luftstrom über die hohlzylinderförmigen Aufnahmevorsprünge in die Abtrennungskammer einführbar ist oder
- als Abfuhrkanal zum Abführen des CO2-reduzierten Luftstroms aus der Abtrennungskammer, wobei der Luftstrom über die hohlzylinderförmigen Aufnahmevorsprünge aus der Abtrennungskammer abführbar ist.

Des Weiteren ist es vorteilhaft, wenn die Abtrennungskammer eine der Kammerwand gegenüberliegende weitere Kammerwand mit einem Aufnahmebereich für ein gegenüberliegendes Ende der hohlzylinderförmigen CO2-Abtrennungsmodule aufweist, wobei im Falle, dass die Kammerwand
- lufteinfuhrseitig angeordnet ist, die gegenüberliegende weitere Kammerwand zu den Lufteinfuhröffnungen komplementäre Luftabfuhröffnungen aufweist, welche derart angeordnet und ausgebildet sind, dass ein sich im Betrieb ausbildender Strömungsweg des eingeführten Luftstroms durch den hohlzylinderförmigen CO2-Abtrennungskörper verläuft, um aus der Abtrennungskammer abgeführt zu werden; oder
- luftabfuhrseitig angeordnet ist, die gegenüberliegende weitere Kammerwand zu den Luftabfuhröffnungen komplementäre Lufteinfuhröffnungen aufweist, welche derart angeordnet und ausgebildet sind, dass ein sich im Betrieb ausbildender Strömungsweg des eingeführten Luftstroms durch den hohlzylinderförmigen CO2-Abtrennungskörper verläuft, um aus der Abtrennungskammer abgeführt zu werden.

Der Abstand der beiden Kammerwände zueinander kann im Wesentlichen der Länge der CO2-Abtrennungsmodule entsprechen. Der Aufnahmebereich kann zylinderförmige, insbesondere vollzylinderförmige oder hohlzylinderförmige Aufnahmevorsprünge analog zu denjenigen der Kammerwand aufweisen. Hierbei sind insbesondere folgende Fälle bevorzugt:
- Die Kammerwand ist lufteinfuhrseitig angeordnet und die Lufteinfuhröffnungen sind fluidisch mit den hohlzylinderförmigen Aufnahmevorsprüngen verbunden, sodass der Luftstrom axial über die zylinderförmigen Hohlräume in die Abtrennungskammer einführbar ist bzw. eingeführt wird. In diesem Fall ist der Aufnahmebereich der gegenüberliegenden weiteren Kammerwand ausgebildet, die zylinderförmigen Hohlräume luftabfuhrseitig zu verschließen und weist außerhalb des Aufnahmebereichs komplementäre Luftabfuhröffnungen auf, sodass der Luftstrom im Betrieb in radialer Richtung aus den zylinderförmigen Hohlräumen durch die hohlzylinderförmigen CO2-Abtrennungskörper geführt bzw. umgelenkt wird, um aus der Abtrennungskammer abgeführt zu werden.
- Die Kammerwand ist lufteinfuhrseitig angeordnet und die Lufteinfuhröffnungen sind nicht fluidisch mit den zylinderförmigen Aufnahmevorsprüngen verbunden, sodass der Luftstrom außerhalb der hohlzylinderförmigen CO2-Abtrennungsmodule in die Abtrennungskammer einführbar ist bzw. eingeführt wird. In diesem Fall sind die komplementären Luftabfuhröffnungen im Aufnahmebereich der gegenüberliegenden weiteren Kammerwand angeordnet, sodass der Luftstrom im Betrieb in radialer Richtung durch die hohlzylinderförmigen CO2-Abtrennungskörper in die zylinderförmigen Hohlräume geführt bzw. umgelenkt wird, um aus der Abtrennungskammer abgeführt zu werden.
- Die Kammerwand ist luftabfuhrseitig angeordnet und die Luftabfuhröffnungen sind fluidisch mit den hohlzylinderförmigen Aufnahmevorsprüngen verbunden, sodass der Luftstrom axial über die zylinderförmigen Hohlräume aus der Abtrennungskammer abführbar ist bzw. abgeführt wird. In diesem Fall ist der Aufnahmebereich der gegenüberliegenden weiteren Kammerwand ausgebildet, die zylinderförmigen Hohlräume lufteinfuhrseitig zu verschließen und weist außerhalb des Aufnahmebereichs komplementäre Lufteinfuhröffnungen auf, sodass der Luftstrom im Betrieb in radialer Richtung durch die hohlzylinderförmigen CO2-Abtrennungskörper in die zylinderförmigen Hohlräume geführt bzw. umgelenkt wird, um aus der Abtrennungskammer abgeführt zu werden.
- Die Kammerwand ist luftabfuhrseitig angeordnet und die Luftabfuhröffnungen sind nicht fluidisch mit den zylinderförmigen Aufnahmevorsprüngen verbunden, sodass der Luftstrom außerhalb der hohlzylinderförmigen CO2-Abtrennungsmodule aus der Abtrennungskammer abführbar ist bzw. abgeführt wird. In diesem Fall sind die komplementären Lufteinfuhröffnungen im Aufnahmebereich der gegenüberliegenden weiteren Kammerwand angeordnet, sodass der Luftstrom im Betrieb in radialer Richtung aus den zylinderförmigen Hohlräumen durch die hohlzylinderförmigen CO2-Abtrennungskörper geführt bzw. umgelenkt wird, um aus der Abtrennungskammer abgeführt zu werden.

Des Weiteren ist es vorteilhaft, wenn die zylinderförmigen Aufnahmevorsprünge an der Mantelfläche oder der Innenfläche ein Dichtungselement zum Abdichten aufgenommener hohlzylinderförmiger CO2-Abtrennungsmodule aufweisen.

Die CO2-Abtrennungsvorrichtung kann ferner zumindest eine der folgenden Einheiten aufweisen:
- Gebläseeinheit, insbesondere mit einer Vielzahl von Ventilatoren zum Zuführen des Luftstroms;
- Pumpeinheit zum Bereitstellen eines Überdrucks und/oder Unterdrucks für das Freisetzungsverfahren bzw. Desorptionsverfahren;
- Wasserdampfgenerator zum Bereitstellen von Wasserdampf für das Freisetzungsverfahren bzw. Desorptionsverfahren;
- elektrische Heizeinheit zur zusätzlichen Erwärmung des Abtrennungsmittels für das Freisetzungsverfahren bzw. Desorptionsverfahren;
- Sensoreinheit für das Abtrennungs- und Freisetzungsverfahren
- Steuereinheit zur Steuerung und/oder Regelung des Abtrennungs- und Freisetzungsverfahrens.

Die Steuereinheit kann ausgebildet sein, mittels Funkübertragung wie W-LAN, Bluetooth, Near-Field Communication etc. mit anderen Steuereinheiten und/oder einer zentralen Steuereinheit des CO2-Abtrennungssystems oder eines übergeordneten Systems verbunden zu werden.

Die CO2-Abtrennungsvorrichtung bzw. das CO2-Abtrennungssystem ist bevorzugt stationär ausgebildet.

Insbesondere kann die CO2-Abtrennungsvorrichtung bzw. das CO2-Abtrennungssystem Teil eines Gebäude-Klimasystems, insbesondere in einem Klimasystem in einem Gebäude integriert sein. Hierbei kann die Abtrennungskammer der CO2-Abtrennungssvorrichtung in den Luft-Klimatisierungskreis des Gebäudes eingebunden sein, sodass der dort ohnehin vorhandene Ventilator die hohlzylinderförmigen CO2-Abtrennungsmodule schnell herunterkühlen kann, da keine großen Wärmekapazitäten im System dämpfend wirken. Auch kann für Kühlung die Klimatisierungseinrichtung temporär kälter gestellt werden, sollte dies gesamtenergetisch vorteilhaft sein.

### Zeichnungen

Die Erfindung wird nachstehend anhand der beigefügten Zeichnungen beispielhaft näher erläutert. Es zeigen:
- Fig. 1: eine schematische Darstellung eines erfindungsgemäßen hohlzylinderförmigen CO2-Abtrennungsmoduls; und
- Fig. 2: eine perspektivische Darstellung eines erfindungsgemäße CO2-Abtrennungssystems.

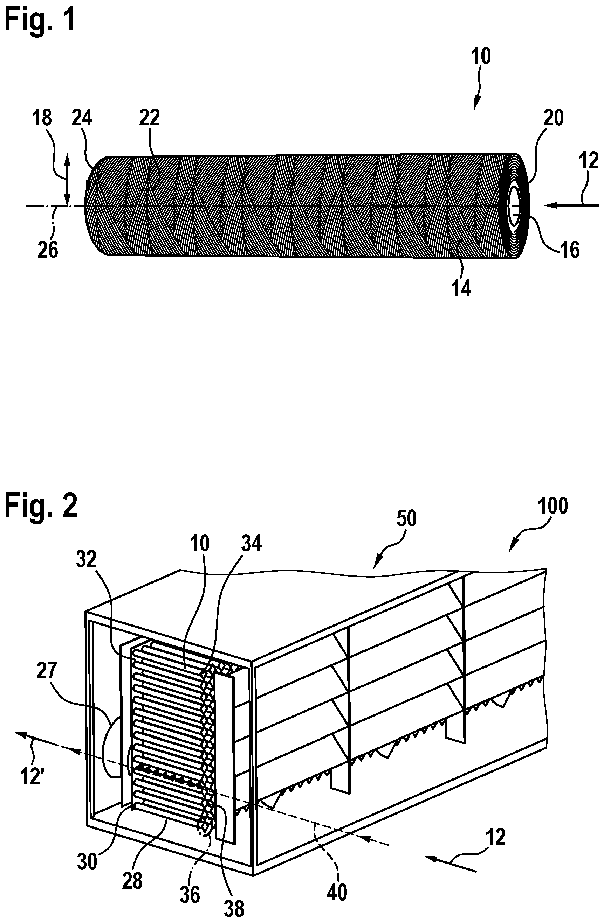

Fig. 1 zeigt ein hohlzylinderförmiges CO2-Abtrennungsmodul, welches in seiner Gesamtheit mit der Bezugsziffer 10 versehen ist.

Das hohlzylinderförmige CO2-Abtrennungsmodul 10 ist zum Abtrennen, insbesondere zur Sorption von CO2 (Kohlenstoffdioxid) aus einem zugeführten Luftstrom 12 ausgebildet bzw. eingerichtet. Hierbei ist das hohlzylinderförmige CO2-Abtrennungsmodul 10 nach Bauart einer Filterkerze ausgebildet.

Das hohlzylinderförmige CO2-Abtrennungsmodul 10 weist zum Abtrennen des CO2 einen hohlzylinderförmigen CO2-Abtrennungskörper 14 und einen umfangsseitig von dem hohlzylinderförmigen CO2-Abtrennungskörper 14 umschlossenen vollzylinderförmigen Hohlraum 16 auf.

Der hohlzylinderförmige CO2-Abtrennungskörper 14 ist in radialer Richtung 18, (sowohl nach außen als auch nach innen) luftdurchlässig ausgebildet. Der hohlzylinderförmige CO2-Abtrennungskörper 14 weist einen hohlzylinderförmigen Stützkern 20 auf, welcher den vollzylinderförmigen Hohlraum 16 umfangsseitig begrenzt.

Zum Abtrennen bzw. zur Adsorption des CO2 weist der hohlzylinderförmige CO2-Abtrennungskörper 14 einen entsprechend funktionalisierten Garn 22 auf, welcher in Umfangrichtung 24 des hohlzylinderförmigen CO2-Abtrennungskörpers 14 um den hohlzylinderförmigen Stützkern 20 gewickelt ist. Der gewickelte Garn 22 ist hierbei vorzugsweise zusammenhängend ausgebildet.

Der vollzylinderförmige Hohlraum 16 erstreckt sich entlang einer Mittelachse 26 des hohlzylinderförmigen CO2-Abtrennungskörpers 14 und ist vorgesehen, um den Luftstrom 12 axial aufzunehmen und anschließend in radialer Richtung 18 nach außen durch den hohlzylinderförmigen CO2-Abtrennungskörper 14 abzuführen oder von außen in radialer Richtung 18 nach innen durch den hohlzylinderförmigen CO2-Abtrennungskörper 14 aufzunehmen und anschließend axial abzuführen.

Fig. 2 zeigt ein CO2-Abtrennungssystem 100 zum Abtrennen von CO2 aus dem mittels einer Ventilatoreinheit 27 zugeführten Luftstrom 12 mit einer CO2-Abtrennungsvorrichtung 50 und einer Vielzahl von hohlzylinderförmigen CO2-Abtrennungsmodulen 10.

Die CO2-Abtrennungsvorrichtung 50 weist eine (nur teilweise dargestellte) Abtrennungskammer 28 und eine in dieser angeordnete Modulaufnahmeeinheit 30. Die Modulaufnahmeeinheit 30 weist eine Vielzahl von (nicht gezeigten) zylinderförmigen Aufnahmevorsprüngen auf, mittels derer die Vielzahl von hohlzylinderförmigen CO2-Abtrennungsmodulen 10 formschlüssig aufgenommen sind.

Hierbei sind die zylinderförmigen Aufnahmevorsprünge in die vollzylinderförmigen Hohlräume 16 der hohlzylinderförmigen CO2-Abtrennungsmodule 10 eingeschoben, wobei Mittelachsen der zylinderförmigen Aufnahmevorsprünge parallel zueinander und horizontal ausgerichtet sind, sodass die aufgenommenen hohlzylinderförmigen CO2-Abtrennungsmodule 10 ebenfalls horizontal in der Abtrennungskammer 28 angeordnet sind.

Die zylinderförmigen Aufnahmevorsprünge sind hohlzylinderförmig ausgebildet und an einer luftabfuhrseitigen Kammerwand 32 der Abtrennungskammer 28 angeordnet. Die hohlzylinderförmigen Aufnahmevorsprünge sind mit (nicht gezeigten) Luftabfuhröffnungen der luftabfuhrseitigen Kammerwand 32 fluidisch verbunden, sodass ein CO2-reduzierter Luftstrom 12' aus den vollzylinderförmigen Hohlräumen 16 der hohlzylinderförmigen CO2-Abtrennungsmodule 10 durch die hohlzylinderförmigen Aufnahmevorsprünge aus der Abtrennungskammer 28 abführbar ist.

Die Abtrennungskammer 28 weist ferner eine der Kammerwand 32 gegenüberliegende weitere Kammerwand 34 mit einem Aufnahmebereich 36 für ein gegenüberliegendes Ende der hohlzylinderförmigen CO2-Abtrennungsmodule 10 auf, welcher ausgebildet ist, die zylinderförmigen Hohlräume 16 lufteinfuhrseitig zu verschließen. Hierbei weist die weitere Kammerwand 34 zu den Luftabfuhröffnungen komplementäre Lufteinfuhröffnungen 38 zum Einführen des Luftstroms 12 in die Abtrennungskammer 28 auf. Die Lufteinfuhröffnungen 38 sind außerhalb des Aufnahmebereiches 36 angeordnet, sodass der Luftstrom 12 im Betrieb nach dem Einführen in die Abtrennungskammer 28 in radialer Richtung 18 durch die hohlzylinderförmigen CO2-Abtrennungskörper 14 in die zylinderförmigen Hohlräume 16 der CO2-Abtrennungsmodule 10 geführt bzw. umgelenkt wird, um anschließend durch die hohlzylinderförmigen Aufnahmevorsprünge aus der Abtrennungskammer 28 abgeführt zu werden. Hieraus bildet sich im Betrieb ein Strömungsweg 40 des eingeführten Luftstroms 12 durch die Abtrennungskammer 28 aus.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Hohlzylinderförmiges CO2-Abtrennungsmodul (10) für eine CO2-Abtrennungsvorrichtung (50) zum Abtrennen von CO2 aus einem zugeführten Luftstrom (12) mit
- einem hohlzylinderförmigen CO2-Abtrennungskörper (14) zum Abtrennen des CO2 aus dem zugeführten Luftstrom (12), wobei der hohlzylinderförmige CO2-Abtrennungskörper (14) in radialer Richtung (18) luftdurchlässig ausgebildet ist; und
- einem umfangsseitig von dem hohlzylinderförmigen CO2-Abtrennungskörper (14) umschlossenen vollzylinderförmigen Hohlraum (16), sodass der Luftstrom (12)
o axial in den vollzylinderförmigen Hohlraum (16) einführbar und anschließend in radialer Richtung (18) nach außen durch den hohlzylinderförmigen CO2-Abtrennungskörper (14) abführbar ist oder
∘ von außen in radialer Richtung (18) nach innen durch den hohlzylinderförmigen CO2-Abtrennungskörper (14) in den vollzylinderförmigen Hohlraum (16) einführbar und anschließend axial aus diesem abführbar ist.

2. Hohlzylinderförmiges CO2-Abtrennungsmodul (10) nach Anspruch 1, **dadurch gekennzeichnet, dass** der vollzylinderförmige Hohlraum (16) sich entlang einer Mittelachse (26) des hohlzylinderförmigen CO2-Abtrennungskörpers (14) erstreckt.

3. Hohlzylinderförmiges CO2-Abtrennungsmodul (10) nach Anspruch 1 oder 2, **dadurch gekennzeichnet, dass** der hohlzylinderförmige CO2-Abtrennungskörper (14) einen hohlzylinderförmigen Stützkern (20) aufweist, welcher den vollzylinderförmigen Hohlraum (16) umfangsseitig begrenzt und in radialer Richtung (18) luftdurchlässig ausgebildet ist.

4. Hohlzylinderförmiges CO2-Abtrennungsmodul (10) nach einem der vorhergehenden Ansprüche, **dadurch gekennzeichnet, dass** der hohlzylinderförmige CO2-Abtrennungskörper (14)
- einen in Umfangrichtung (24) des hohlzylinderförmigen CO2-Abtrennungskörpers (14), insbesondere um den hohlzylinderförmigen Stützkern (20) gewickelten Garn (22) zur Abtrennung, insbesondere Sorption des CO2 aufweist oder daraus besteht; und/oder
- nur eine in Umfangrichtung (24) des hohlzylinderförmigen CO2-Abtrennungskörpers (14), insbesondere um den hohlzylinderförmigen Stützkern (20) sich erstreckende oder gewickelte flächige Lage zur Abtrennung, insbesondere Sorption des CO2 aufweist oder daraus besteht; und/oder
- eine Schichtanordnung aus in Umfangrichtung (24) des hohlzylinderförmigen CO2-Abtrennungskörpers (14), insbesondere um den hohlzylinderförmigen Stützkern (20) sich erstreckenden oder gewickelten flächigen Lagen zur Abtrennung, insbesondere Sorption des CO2 aufweist oder daraus besteht.

5. Hohlzylinderförmiges CO2-Abtrennungsmodul (10) nach Anspruch 4, **dadurch gekennzeichnet, dass**
- der gewickelte Garn (22) zusammenhängend ausgebildet ist; und/oder
- die flächige Lage zusammenhängend, insbesondere ferner flach oder in Umfangrichtung (24) des hohlzylinderförmigen CO2-Abtrennungskörpers (14) gefaltet ausgebildet ist; und/oder
- die Schichtanordnung aus flächigen Lagen zusammenhängend, insbesondere ferner flach oder in Umfangrichtung (24) des hohlzylinderförmigen CO2-Abtrennungskörpers (14) gefaltet ausgebildet ist.

6. Hohlzylinderförmiges CO2-Abtrennungsmodul (10) nach einem der vorhergehenden Ansprüche, **dadurch gekennzeichnet, dass** es nach Bauart einer Filterkerze, insbesondere einer Meltblown-Filterkerze, oder eines Tiefenfilters oder eines Oberflächenfilters oder eines Faltenfilters ausgebildet ist.

7. Hohlzylinderförmiges CO2-Abtrennungsmodul (10) nach einem der vorhergehenden Ansprüche, **gekennzeichnet durch** zumindest einen Erwärmungskörper zum Erwärmen des hohlzylinderförmigen CO2-Abtrennungskörpers (14), welcher insbesondere hohlzylinderförmig und in radialer Richtung (18) luftdurchlässig ausgebildet ist.

8. Hohlzylinderförmiges CO2-Abtrennungsmodul (10) nach Anspruch 7, **dadurch gekennzeichnet, dass** der Erwärmungskörper
- einen in Umfangrichtung (24) des hohlzylinderförmigen CO2-Abtrennungskörpers (14), insbesondere um den hohlzylinderförmigen Stützkern (20) gewickelten Heizdraht aufweist oder daraus besteht; und/oder
- eine in Umfangrichtung (24) des hohlzylinderförmigen CO2-Abtrennungskörpers (14), insbesondere um den hohlzylinderförmigen Stützkern (20) sich erstreckende oder gewickelte flächige Heizlage aufweist oder daraus besteht.

9. CO2-Abtrennungsvorrichtung (50) zum Abtrennen von CO2 aus einem zugeführten Luftstrom (12) mit einer Abtrennungskammer (28) und einer in dieser angeordneten Modulaufnahmeeinheit (30), **dadurch gekennzeichnet, dass** die Modulaufnahmeeinheit (30) eine Vielzahl von zylinderförmigen Aufnahmevorsprüngen zur formschlüssigen Aufnahme von hohlzylinderförmigen CO2-Abtrennungsmodulen (10) nach einem der vorhergehenden Ansprüche aufweist.

10. CO2-Abtrennungsvorrichtung (50) nach Anspruch 9, **dadurch gekennzeichnet, dass** die zylinderförmigen Aufnahmevorsprünge vollzylinderförmig oder hohlzylinderförmig und ferner ausgebildet sind, in die vollzylinderförmigen Hohlräume (16) der hohlzylinderförmigen CO2-Abtrennungsmodule (10) eingeschoben oder über die hohlzylinderförmigen CO2-Abtrennungskörper (14) der hohlzylinderförmigen CO2-Abtrennungsmodule (10) aufgeschoben zu werden, um diese formschlüssig aufzunehmen.

11. CO2-Abtrennungsvorrichtung (50) nach einem der Ansprüche 9 oder 10, **dadurch gekennzeichnet, dass** Mittelachsen der zylinderförmigen Aufnahmevorsprünge parallel zueinander, insbesondere bei bestimmungsgemäßem Gebrauch der CO2-Abtrennungsvorrichtung (50) horizontal ausgerichtet sind, sodass die aufgenommenen hohlzylinderförmigen CO2-Abtrennungsmodule (10) horizontal in der Abtrennungskammer (28) angeordnet sind.

12. CO2-Abtrennungsvorrichtung (50) nach einem der Ansprüche 9 bis 11, **dadurch gekennzeichnet, dass** die zylinderförmigen Aufnahmevorsprünge an einer Kammerwand (32) der Abtrennungskammer (28) angeordnet, insbesondere ferner integral mit dieser verbunden sind.

13. CO2-Abtrennungsvorrichtung (50) nach Anspruch 12, **dadurch gekennzeichnet, dass** die Kammerwand (32)
- lufteinfuhrseitig angeordnet ist und eine Vielzahl von Lufteinfuhröffnungen zum Einführen des Luftstroms (12) in die Abtrennungskammer (28) aufweist; oder
- luftabfuhrseitig angeordnet ist und eine Vielzahl von Luftabfuhröffnungen zum Abführen des CO2-reduzierten Luftstroms (12`) aus der Abtrennungskammer (28) aufweist.

14. CO2-Abtrennungsvorrichtung (50) nach Anspruch 13, **dadurch gekennzeichnet, dass** die zylinderförmigen Aufnahmevorsprünge hohlzylinderförmig ausgebildet und mit den
- Lufteinfuhröffnungen fluidisch verbunden sind, sodass der Luftstrom (12) in die vollzylinderförmigen Hohlräume (16) von formschlüssig aufgenommenen hohlzylinderförmigen CO2-Abtrennungsmodulen (10) einführbar ist; oder
- Luftabfuhröffnungen fluidisch verbunden sind, sodass der CO2-reduzierte Luftstrom (12) aus den vollzylinderförmigen Hohlräumen (16) von formschlüssig aufgenommenen hohlzylinderförmigen CO2-Abtrennungsmodulen (10) abführbar ist.

15. CO2-Abtrennungsvorrichtung (50) nach Anspruch 13 oder 14, **dadurch gekennzeichnet, dass** die Abtrennungskammer (28) eine der Kammerwand (32) gegenüberliegende weitere Kammerwand (34) mit einem Aufnahmebereich (36) für ein gegenüberliegendes Ende der hohlzylinderförmigen CO2-Abtrennungsmodule (10) aufweist, wobei im Falle, dass die Kammerwand (28)
- lufteinfuhrseitig angeordnet ist, die gegenüberliegende weitere Kammerwand (34) zu den Lufteinfuhröffnungen komplementäre Luftabfuhröffnungen aufweist, welche derart angeordnet und ausgebildet sind, dass ein sich im Betrieb ausbildender Strömungsweg (40) des eingeführten Luftstroms (12) durch den hohlzylinderförmigen CO2-Abtrennungskörper (14) verläuft, um aus der Abtrennungskammer (28) abgeführt zu werden; oder
- luftabfuhrseitig angeordnet ist, die gegenüberliegende weitere Kammerwand zu den Luftabfuhröffnungen komplementäre Lufteinfuhröffnungen aufweist, welche derart angeordnet und ausgebildet sind, dass ein sich im Betrieb ausbildender Strömungsweg (40) des eingeführten Luftstroms (12) durch den hohlzylinderförmigen CO2-Abtrennungskörper (14) verläuft, um aus der Abtrennungskammer (28) abgeführt zu werden.

16. CO2-Abtrennungsvorrichtung (50) nach einem der Ansprüche 9 bis 15, **dadurch gekennzeichnet, dass** die zylinderförmigen Aufnahmevorsprünge an einer Mantelfläche oder einer Innenfläche ein Dichtungselement zum Abdichten aufgenommener hohlzylinderförmiger CO2-Abtrennungsmodule (10) aufweisen.

17. CO2-Abtrennungssystem (100) zum Abtrennen von CO2 aus einem zugeführten Luftstrom (12) mit
- einer CO2-Abtrennungsvorrichtung (50) nach einem der Ansprüche 9 bis 16 und
- einer Vielzahl von hohlzylinderförmigen CO2-Abtrennungsmodulen (10) nach einem der Ansprüche 1 bis 8, welche in der Modulaufnahmeeinheit (30) der CO2-Abtrennungsvorrichtung (50) formschlüssig aufgenommen sind.

18. Verwendung eines hohlzylinderförmigen CO2-Abtrennungsmoduls (10) nach einem der Ansprüche 1 bis 8 zum Abtrennen von CO2 aus einem zugeführten Luftstrom (12), wobei der Luftstrom (12) zum Abtrennen des CO2
- axial in den vollzylinderförmigen Hohlraum (16) eingeführt und anschließend in radialer Richtung (18) nach außen durch den hohlzylinderförmigen CO2-Abtrennungskörper (14) abgeführt oder
- von außen in radialer Richtung (18) nach innen durch den hohlzylinderförmigen CO2-Abtrennungskörper (14) in den vollzylinderförmigen Hohlraum (16) eingeführt und anschließend axial aus diesem abgeführt wird.
